(19) Europäisches Patentamt
European Patent Office
Office européen des brevets

(11) EP 0 838 894 A1

(12) EUROPEAN PATENT APPLICATION
published in accordance with Art. 158(3) EPC

(43) Date of publication:
29.04.1998 Bulletin 1998/18

(51) Int. Cl.$^6$: H02M 7/155

(21) Application number: 95924523.4

(86) International application number:
PCT/JP95/01362

(22) Date of filing: 07.07.1995

(87) International publication number:
WO 97/03493 (30.01.1997 Gazette 1997/06)

(84) Designated Contracting States:
DE FR GB NL

(71) Applicant: Hitachi, Ltd.
Chiyoda-ku, Tokyo 101-0062 (JP)

(72) Inventors:
• HORIE, Akira
Hitachinaka-shi, Ibaraki 312 (JP)

• TSUBOI, Takashi
Hitachinaka-shi, Ibaraki 312 (JP)

(74) Representative:
Strehl Schübel-Hopf & Partner
Maximilianstrasse 54
80538 München (DE)

(54) ELECTRIC POWER CONVERTER FOR AC ELECTRIC VEHICLES

(57) A power converter for an AC electric vehicle having power factor control means (14, 12, 17), the AC side of which is connected with an AC overhead line through a transformer (2) and the DC side of which is connected with a control apparatus (3) of a motor for driving the electric vehicle, for achieving delivery and receipt, between the control apparatus and the AC overhead line, of power accompanying service operation and regenerative operation of the motor (5) by controlling the power factor on the AC side, the power converter comprising DC voltage control means (10, 11) for controlling the voltage on the DC side of the converter to assume a predetermined value, service/regenerative operation detection means for detecting whether the motor is in service operation or in regenerative operation, and overhead line voltage detection means for detecting the voltage on the overhead line, in which the power factor control means includes means (15, 16) responsive to detection signals from the overhead line voltage detection means and the service/regenerative operation detection means for controlling the power factor on the AC side such that variations in the overhead line voltage accompanying the service operation and regenerative operation of the motor are suppressed.

FIG.1

EP 0 838 894 A1

## Description

Technical Field

The present invention relates to an electric vehicle receiving power from an AC overhead line and, more particularly, to a power converter for an AC electric vehicle including power factor control means, connected with a control apparatus for controlling an electric vehicle driving motor, for achieving delivery and receipt, between the control apparatus and the overhead line, of power accompanying service operation and regenerative operation of the motor by controlling the power factor on the AC side.

Background Art

As power converters installed on an electric vehicle traveling in an AC feeder section and converting AC power received from an overhead line into DC power, there is in use the one performing AC-DC conversion by means of a diode bridge (having no regenerative function), an external commutated converter controlling the phase of AC for controlling the DC voltage by means of a thyristor bridge (having a regenerative function), and a self commutated converter, capable of both service operation and regenerative operation, attaining a unity power factor by executing PWM control by the use of a self arc suppressing semiconductor device. Such self commutated converter is described for example in the gazette of Japanese Laid-open Patent No. Sho 62-123961.

With the recent progress in large-capacity self-arc-suppressing semiconductor switching devices such as GTO (Gate Turn Off thyristor) and IGBT (Insulated Gate Bipolar Transistor), self commutated converters capable of regenerative braking operation have come to be employed. Further, with the increase in the transportation capacity, the electric power handled is also increasing.

In the past, attention was only paid to the reactive power of the overhead line in either of the service operation and the regenerative operation and control of a self commutated converter was only executed to cause the reactive power to be zero, i.e., to cause the power factor to be unity, at all times.

However, with the increase in the electric power handled, the control to attain the unity power factor has brought about such situations in which, when service operation is made in a position far away from the substation, the voltage on the overhead line drops and, hence, it becomes impossible to perform a predetermined traveling function or, when a regenerative braking operation is made in a position far away from the substation, the voltage on the overhead line, conversely, rises and thereby a predetermined breaking force becomes unobtainable.

An object of the present invention is to provide a power converter for an AC electric vehicle capable of stabilizing the overhead line voltage and preventing deterioration in the service performance and the regenerative braking performance.

Disclosure of Invention

The above mentioned object can be achieved by providing a power converter for an AC electric vehicle with power factor control means, the AC side of which is connected with an AC overhead line through a transformer and the DC side of which is connected with a control apparatus of a motor for driving the electric vehicle, for achieving delivery and receipt, between the control apparatus and the AC overhead line, of power accompanying service operation and regenerative operation of the motor by controlling the power factor on the AC side, the power converter comprising DC voltage control means for controlling the voltage on the DC side of the converter to assume a predetermined value, service/regenerative operation detection means for detecting whether the motor is in service operation or in regenerative operation, and overhead line voltage detection means for detecting the voltage on the overhead line, in which the power factor control means includes means responsive to detection signals from the overhead line voltage detection means and the service/regenerative operation detection means for controlling the power factor on the AC side such that variations in the overhead line voltage accompanying the service and regenerative operations of the motor are suppressed.

According to the present invention, by controlling the power factor for the power converter depending on whether the mode is for service operation or for regenerative operation, the voltage on the AC side of the power converter can always be kept at a predetermined value, though the reactive power may sometimes become greater by execution of such control (because no control is made to keep the power factor at unity). Thus, especially in the mode of regenerative operation, the DC voltage becomes greater than the AC voltage on the side of the overhead line, and the power corresponding to the difference can be regenerated on the side of the overhead line. Therefore, the invention as the power converter for an AC electric vehicle gives a good regenerative braking performance.

Brief Description of Drawings

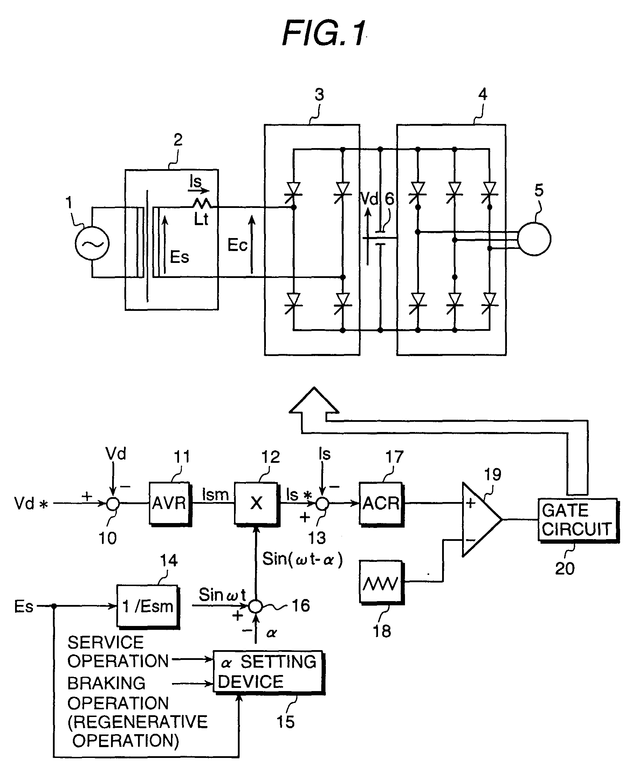

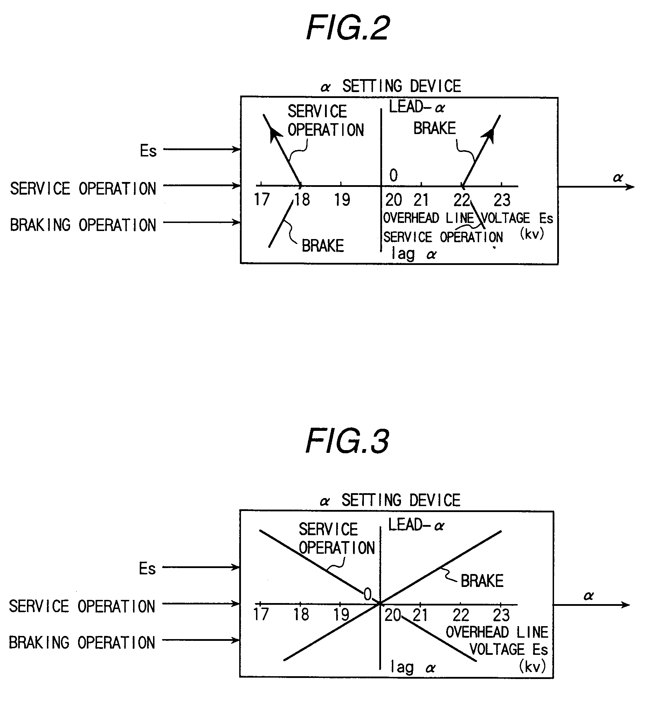

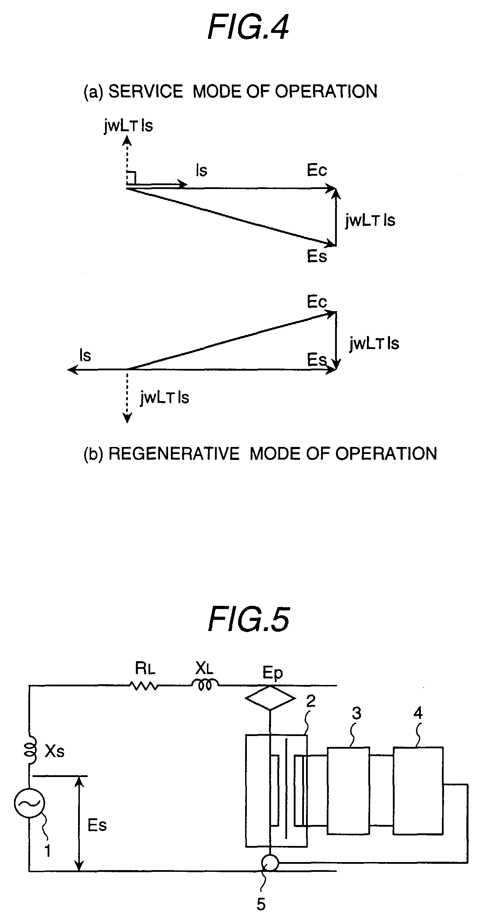

FIG. 1 is a structural drawing of a power converter showing an embodiment of the invention, FIG. 2 shows an embodiment of the $\alpha$ setting device in FIG. 1, FIG. 3 shows another embodiment of the $\alpha$ setting device in FIG. 1, and FIG. 4 is a drawing explanatory of the operation of a self commutated converter of the present invention.

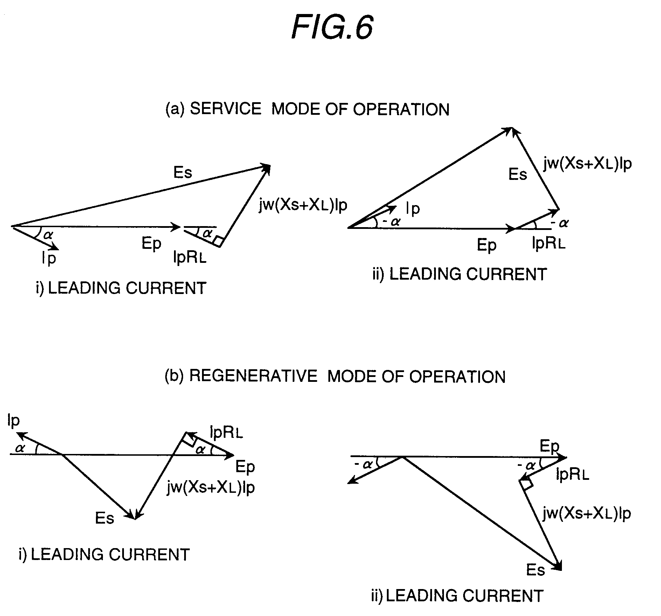

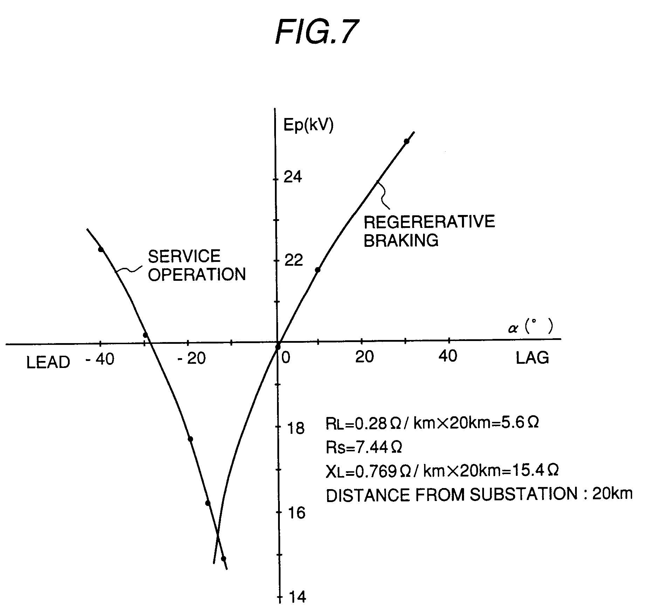

FIG. 5 is a drawing explanatory of the impedance in a feeder system used for explanation of the principle of the invention, FIG. 6 is a drawing showing the relationship between the substation voltage $E_S$ and the overhead line voltage $E_P$ used for explaining the principle of the invention, and FIG. 7 is a drawing showing the relationship between the phase and the overhead line voltage used for explaining the principle of the invention.

Best Mode for Carrying Out the Invention

Before describing an embodiment of the present invention, the principle underlying the invention will be described with reference to FIG. 5 to FIG. 7.

The basic reason for the drop in the overhead line voltage can be analytically explained with FIG. 5. Here, FIG. 6 schematically shows impedance in a feeder system. The substation is denoted by reference numeral 1, the reactive component of the transformer in the substation by $X_S$, the resistive component of the overhead line by $R_L$, and the reactive component of the overhead line by $X_L$. Generally, their values are approximately given by $X_S = 7.44 \ \Omega$, $R_L = 0.28 \ \Omega/Km$, and $X_L = 0.769 \ \Omega/Km$.

Here, the delivery voltage from the substation not including the reactance $X_S$ will be denoted by $E_S$ and the voltage at the pantograph point of the electric vehicle will be denoted by $E_P$.

The power converter for electric vehicle comprises a transformer 2 for transforming the overhead line voltage to a voltage convenient to handle, a PWM converter 3 for converting the AC voltage from the transformer into a DC voltage, a PWM inverter 4 for converting the DC voltage into an AC voltage for controlling an induction motor 5, and the like.

Supposing now, when an electric vehicle is in a point 20 Km apart from the substation, that a peak power of 8 MW in its service operation and a power of -8 MW in its regenerative braking operation are controlled, the overhead line voltage $E_P$ existing at this time will be obtained. The delivery voltage $E_p$ from the substation is assumed to be 20 KV.

FIG. 6 shows vector diagrams indicating the relationship between the overhead line voltage $E_P$ and the substation delivery voltage $E_S$ in the mode of service operation and the mode of regenerative operation.

Representing the overhead line current by $I_P$ since the PWM converter 3 can control the power factor with respect to the overhead line voltage $E_P$ it is assumed that the phase of the overhead line current $I_P$ relative to the overhead line voltage $E_P$ is controlled to have a phase angle of $\alpha$ in its lagging direction.

Representing the power for controlling the electric vehicle by P, the following equation holds for the relationship between the overhead line voltage $E_P$ and the overhead line current $I_P$:

$$P = I_P \times E_P \times \cos\alpha \tag{1}$$

The relationship between the overhead line voltage $E_P$ and the substation voltage $E_S$ is expressed as:

$$E_S = \sqrt{(E_P + I_P R_L \cos\alpha + I_P X_L \sin\alpha)^2 + (I_P X_L \cos\alpha - I_P R_L \sin\alpha)^2} \tag{2}$$

From (1), $I_P = P / (E_P \cdot \cos\alpha)$. Substituting this into equation (2), $E_P$ is expressed as

$$E_P = \sqrt{\frac{1}{2}\{E_S^2 - 2P(R_L + X_L \tan\alpha) + \sqrt{E_S^4 - 4P(R_L + X_L \tan\alpha)E_S^2 - 4P^2(X_L + R_L \tan\alpha)^2}\}} \tag{3}$$

The results obtained by calculation of the overhead line voltages $E_P$ according to equation (3) on the above described conditions are shown in FIG. 7.

When a power of 8 MW for the service operation is to be controlled in a position 20 Km apart from the substation, it is shown that the drop of the overhead line voltage becomes extremely great when control is executed with a unity power factor, i.e., it falls below 16 KV against the substation delivery voltage 20 KV and thus the service operation becomes impossible. It is known that, in such case, the overhead line voltage $E_P$ is recovered so that the service operating performance is given by controlling the phase of the current $I_P$ controlled by the PWM converter 3 to shift into its leading direction.

On the other hand, when a regenerative power of -8 MW is to be controlled with a unity power factor, the overhead line voltage tends to slightly lower. However, when the overhead line voltage is lowered by existence of other electric vehicles in service operation (the overhead line voltage largely falls when there are present other vehicles provided with conventional external commutated converters and they consume lagging currents with a power factors of around 0.8), it is known that the overhead line voltage $E_P$ can be recovered by controlling the phase of the current $I_P$ controlled by the PWM converter 3 to shift into its lagging direction and thus stabilization of the overhead line voltage $E_P$ can be achieved without impairing the service operating performances of other electric vehicles in service operation.

An embodiment of the present invention based on the above described thought will be described with reference to FIG. 1.

AC power supplied from an AC power supply 1 such as a substation through an overhead line is taken in by a pantograph not shown and supplied to a transformer 2. The transformer 2 is connected to a pulse width modulation (PWM) converter 3 as a self commutated converter through an inductance $L_T$ (which is concurrently used as the transformer winding). The DC side of the PWM converter 3 is connected to a three-phase PWM inverter 4 through a smoothing capacitor 6. By AC power with variable-voltage and variable-frequency generated by the PWM inverter 4, the induction motor 5 as the load is driven.

The PWM converter 3 operates so that the DC voltage $V_d$ assumes a predetermined value. The DC voltage command $V_d{}^*$ and the DC voltage $V_d$ detected as the voltage across the smoothing capacitor 6 are compared in an adder 10 and the difference between them is input to a voltage regulator 11. The voltage regulator 11 outputs a crest value command $I_{sm}$ of the current $I_s$ to be passed through the AC side of the PWM converter 3.

Meanwhile, the voltage $E_s$ of the AC power supply 1 picked out of the secondary side of the transformer 2 is divided by its crest value $E_{sm}$ in a divider 14 to be converted into a unit sine wave, $\sin \omega t$, and $\sin \omega t$ and the crest value command $I_{sm}$ output from the voltage regulator 11 are multiplied in a multiplier 12 and, thereby, an instantaneous AC current command $I_s{}^*$ is generated. This instantaneous AC current command $I_s{}^*$ and the PWM converter output current $I_s$ are compared in an adder 13 and the difference between them is input to a current regulator 17. The current regulator 17 outputs a modulation wave corresponding to the AC voltage command for the PWM converter and, thereupon, the modulation wave and a triangular wave generated by a triangular wave generator 18 are compared in a comparator 19 and a pulse width modulation signal is output therefrom. This signal is amplified in a gate circuit 20 and used for ON-OFF controlling the self arc suppressing switching elements constituting the PWM converter 3.

Service and regenerative modes of operation by the use of the PWM converter 3 will be described using vector diagrams. FIG. 4(a) shows the service mode of operation. Control is executed such that the phase of the output voltage from the converter is caused to lag the power supply voltage $E_S$ and the voltage difference between the voltage $E_S$ and the input voltage to the converter $E_C$, i.e., the voltage applied to the inductance $L_T$ within the transformer 2, assumes the phase leading the power supply voltage $E_S$ by 90°. As a result, the current $I_s$ flowing through $L_T$ is rendered in phase with the power supply voltage $E_S$.

FIG. 4(b) shows the regenerative mode of operation. Conversely to the service mode of operation, control is executed such that the input voltage $E_C$ to the converter is caused to lead the power supply voltage $E_S$ and the voltage difference between $E_S$ and $E_C$, i.e., the voltage applied to the inductance $L_T$ within the transformer 2, assumes the phase lagging the power supply voltage $E_S$ by 90°. As a result, the current $I_S$ flowing through $L_T$ is rendered 180° out of phase with the power supply voltage $E_S$.

Adjustment of the power factor according to the present invention will now be described. As described above, the voltage signal of the AC power supply 1 ($E_P$ can be obtained by reversely calculating the overhead line voltage from the transformer secondary voltage $E_S$ and the transformation ratio or, when $E_P$ is unobtainable from $E_S$ on account of the internal inductance $L_T$, $E_P$ may be obtained directly.) is calculated from the unit sine wave signal $\sin \omega t$ by the divider 14. Thereafter, a unit sine wave $\sin(\omega t - \alpha)$ with the phase lagging the phase of the AC power supply $E_S$ by $\alpha$ or so is output from an $\alpha$ setting device, which determines whether the mode is for service operation or for regenerative braking operation and, where the mode is for service operation, the phase of lead $\alpha$ is set negative when the overhead line voltage $E_P$ is low, and where the mode is for regenerative braking operation, the phase of lead $\alpha$ is set negative when the overhead line voltage $E_P$ is high. Then, the signal is multiplied by $I_{sm}$, and the command $I_s{}^*$ for the instantaneous value of the AC current to be passed through the inductance $L_T$ of the transformer 2 is obtained. FIG. 2 and FIG. 3 show examples of such $\alpha$ setting device.

The example shown in FIG. 2 is used for the purpose, upon detecting the overhead line voltage being lowered in the mode of service operation, to control the phase of the current to be shifted to its leading side to thereby suppress such lowering, and, upon detecting the overhead line voltage being risen in the mode of regenerative braking operation, to control the phase of the current to be shifted to its leading side to thereby suppress such rising. When control reverse to the above is required, the phase is controlled to the leading side.

The example shown in FIG. 3 is used for the purpose, upon detecting the overhead line voltage being risen in the mode of service operation, to control the phase of the current to be shifted to its lagging side so that the overhead line voltage lowers, and, upon detecting the overhead line voltage being lowered in the mode of regenerative braking operation, to control the phase of the current to be shifted to its lagging side so that the overhead line voltage rises and, thus, to stabilize the overhead line voltage.

Thus, by the addition of the α setting device, which determines whether the mode is for service operation or for regenerative braking operation and sets α depending on the overhead line voltage, the overhead line voltage can be stabilized and therefore stable service operation of an AC electric vehicle can be achieved.

According to the invention, as described above, fall or rise of the overhead line voltage in the mode of service operation or regenerative braking operation of an AC electric vehicle can be prevented and therefore stabilized operation of the AC electric vehicle can be achieved.

Although the motor for driving the electric vehicle has been described to be an induction motor in the foregoing description of the embodiment, the invention is not limited to that but the motor can be a chopper- or camshaft-controlled DC motor.

Further, although the PWM converter has been described to be a two-level converter in the above description of the embodiment, the same effect can be obtained even if a three-level converter is used instead.

Industrial Applicability

As described in the foregoing, the power converter for an AC electric vehicle according to the present invention is suited for use in such a case where the overhead line voltage varies because, for example, a large number of electric vehicles run in an AC feeder section, or where the feeder section is long because the substations supplying power to the AC feeder sections are few.

## Claims

1. A power converter for an AC electric vehicle having power factor control means, the AC side of which is connected with an AC overhead line through a transformer and the DC side of which is connected with a control apparatus of a motor for driving the electric vehicle, for achieving delivery and receipt, between said control apparatus and said AC overhead line, of power accompanying service operation and regenerative operation of said electric motor by control of the power factor on said AC side, said power converter for an AC electric vehicle comprising:

   DC voltage control means for controlling the voltage on the DC side of said converter to assume a predetermined value, service/regenerative operation detection means for detecting whether said motor is in service operation or in regenerative operation, and overhead line voltage detection means for detecting the voltage on said overhead line, wherein said power factor control means, in response to detection signals from said overhead line voltage detection means and said service/regenerative operation detection means, controls the power factor on said AC side such that variations in said overhead line voltage accompanying the service operation and the regenerative operation of said motor are suppressed.

2. A power converter for an AC electric vehicle according to claim 1, wherein said power factor control means includes means for causing the phase of the current controlled by said power converter to lead the phase of said overhead line voltage upon falling of said overhead line voltage below a predetermined value during the time of the service operation.

3. A power converter for an AC electric vehicle according to claim 1, wherein said power factor control means includes means for causing the phase of the current controlled by said power converter to lead the phase of said overhead line voltage upon rising of said overhead line voltage above a predetermined value during the time of the regenerative operation.

4. A power converter for an AC electric vehicle according to claim 1, wherein said overhead line voltage detection means includes means for detecting the value of the overhead line voltage and the phase of the voltage and said power factor control means includes phase angle setting means for setting the phase angle α of the AC current on the basis of the value of said overhead line voltage and the detection signal from said service/regenerative operation detection means and AC current control means for generating a command value for an instantaneous value of the AC current supplied to said power converter on the basis of said phase angle, the phase of said overhead line voltage, and the output signal from said DC voltage control means and controlling the instantaneous value of the AC current actually input to said power converter to turn to said command value.

# FIG.1

## FIG.2

α SETTING DEVICE

Es

SERVICE OPERATION

BRAKING OPERATION

## FIG.3

α SETTING DEVICE

Es

SERVICE OPERATION

BRAKING OPERATION

# FIG.4

## (a) SERVICE MODE OF OPERATION

## (b) REGENERATIVE MODE OF OPERATION

# FIG.5

# FIG.6

(a) SERVICE  MODE OF OPERATION

i) LEADING CURRENT

ii) LEADING CURRENT

(b) REGENERATIVE  MODE OF OPERATION

i) LEADING CURRENT

ii) LEADING CURRENT

# FIG.7

Ep(kV)

24

REGERERATIVE
BRAKING

SERVICE
OPERATION

22

$\alpha$ (°)

LEAD   - 40        - 20        0        20        40        LAG

18    RL=0.28Ω/km×20km=5.6Ω

Rs=7.44Ω

XL=0.769Ω/km×20km=15.4Ω

DISTANCE FROM SUBSTATION : 20km

16

14

## INTERNATIONAL SEARCH REPORT

| International application No. |
|---|
| PCT/JP95/01362 |

### A. CLASSIFICATION OF SUBJECT MATTER

Int. Cl$^6$ H02M7/155

According to International Patent Classification (IPC) or to both national classification and IPC

### B. FIELDS SEARCHED

Minimum documentation searched (classification system followed by classification symbols)

Int. Cl$^6$ H02M7/155, B60L9/12, B60L9/24

Documentation searched other than minimum documentation to the extent that such documents are included in the fields searched

| Jitsuyo Shinan Koho | 1926 – 1995 |
|---|---|
| Kokai Jitsuyo Shinan Koho | 1971 – 1995 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP, 1-252173, A (Toshiba Corp.), October 6, 1989 (06. 10. 89), Lines 1 to 10, upper right column, page 4 (Family: none) | 1 – 4 |
| A | JP, 1-291668, A (Sanyo Electric Co., Ltd.), November 24, 1989 (24. 11. 89), Lines 8 to 10, lower left column, page 2 (Family: none) | 1 – 4 |
| A | JP, 1-136503, A (Hitachi, Ltd.), May 29, 1989 (29. 05. 89), Fig. 1 (Family: none) | 1 – 4 |
| A | JP, 2-276475, A (Hitachi, Ltd.), November 13, 1990 (13. 11. 90), Fig. 5 (Family: none) | 1 – 4 |

☐ Further documents are listed in the continuation of Box C.   ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| September 27, 1995 (27. 09. 95) | October 17, 1995 (17. 10. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)